# EUROPEAN PATENT SPECIFICATION

(11) **EP 2 925 002 B1**
(45) Date of publication and mention of the grant of the patent: **31.01.2018**
(21) Application number: 15155464.9
(22) Date of filing: 17.02.2015
(51) Int. Cl.: H04N 21/238, H04N 21/24, H04N 21/2662, H04N 21/462, H04N 21/63, H04N 21/647, H04N 21/438, H04N 21/845

(54) **System and method for predictive buffering and network shaping**
System und Verfahren zum prädiktiven Puffern und Formen von Netzwerken
Système et procédé de mise en mémoire tampon prédictive et de façonnage de réseau

(30) Priority: 24.03.2014 IL 23168514
(43) Date of publication of application: 30.09.2015
(73) Proprietor: Giraffic Technologies Ltd., Tel Aviv 6350801 (IL)
(72) Inventor: Zanger, Yoel, 6296505 Tel Aviv (IL); Epelbaum, Rotem, 5235614 Ramat Gan (IL); Gat, Gil, 6964135 Tel Aviv (IL); Atzitz, Offer, 6918221 Tel Aviv (IL)
(74) Representative: White, Duncan Rohan

(56) References cited:
- EP-A1- 2 696 552
- WO-A1-2014/026988
- US-A1- 2013 275 557
- "Guidelines for Implementation: DASH-AVC/264 Interoperability Points DASH Industry Forum", , 15 August 2013 (2013-08-15), XP055174477, Retrieved from the Internet: URL:http://dashif.org/w/2013/08/DASH-AVC-2 64-v2.00-hd-mca.pdf [retrieved on 2015-03-06]

## Description

### TECHNICAL FIELD

The present invention relates to the field of computer networks, and more particularly, to improving adaptive video streaming display in such networks.

### BACKGROUND

A common problem encountered by many internet users is low adaptive video streaming watching experience.
Two main problems that harm the end user watching experience are viewing of medium video resolution and frequent resolution changes.

The players try to solve these issues by gathering a buffer of data and measuring the downloading data rate in order to decide about resolution change. Changing network/communication link conditions may cause network bursts. This behavior can cause rapid resolution changes.
These changes degrade the overall user experience and should be avoided.

There is need for a method that will guarantee maximal bit-rate play of adaptive streaming while minimizing player resolution changes, for better watching experience.
EP 2696552 A1 discloses a system for simultaneously optimizing the download speed of a plurality of clients implementing the DASH protocol. The optimization is based on rewriting the clients' requests such that a global download speed for all the requests is not exceeded.
US 2013/027557 A1 discloses a system in which client-requested streaming media content is transmuxed according to the formats supported by content-delivering server and client.
WO 2014/026988 A1 discloses an adaptive HTTP streaming system which provides a representation preference indication to assist an adaptive streaming player in determining whether to download content from available broadcast or unicast sources.

### SUMMARY

The present invention provides an adaptive video streaming system as defined in claim 1. The present invention also provides a method of adaptive video streaming as defined in claim 2. Further aspects and preferred features are set out in the dependent claims.

### BRIEF DESCRIPTION OF THE DRAWINGS

For better understanding of the invention and to show how the same may be carried into effect, reference will now be made, purely by way of example, to the accompanying drawings.
With specific reference now to the drawings in detail, it is stressed that the particulars shown are by way of example and for purposes of illustrative discussion of the preferred embodiments of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice. In the accompanying drawings:
Fig. 1 is a schematic block diagram of a prior-art adaptive video streaming system;
Fig. 2 is a schematic block diagram of an adaptive video streaming system according to the present invention;
Fig. 3 is a general flowchart showing the processing performed by the adaptive streaming optimizer according to the present invention;
Fig. 4 is a detailed flowchart showing the optimization process performed by the adaptive streaming optimizer according to the present invention; and
Fig. 5 is a graph showing empirical results of using the optimization according to the present invention.

### DETAILED DESCRIPTION OF THE INVENTION

The present invention attempts to overcome the shortcoming of prior art adaptive video streaming systems by guaranteeing maximal bit-rate play of adaptive streaming while minimizing player resolution changes.
This goal is achieved by:
1. Shaping the network bursts and predicting the next resolution, thus guaranteeing high quality video with minimal resolution changes.
2. Maximizing download speed for a given internet connection, thus guaranteeing that the player displays the highest resolution possible at minimal resolution changes.

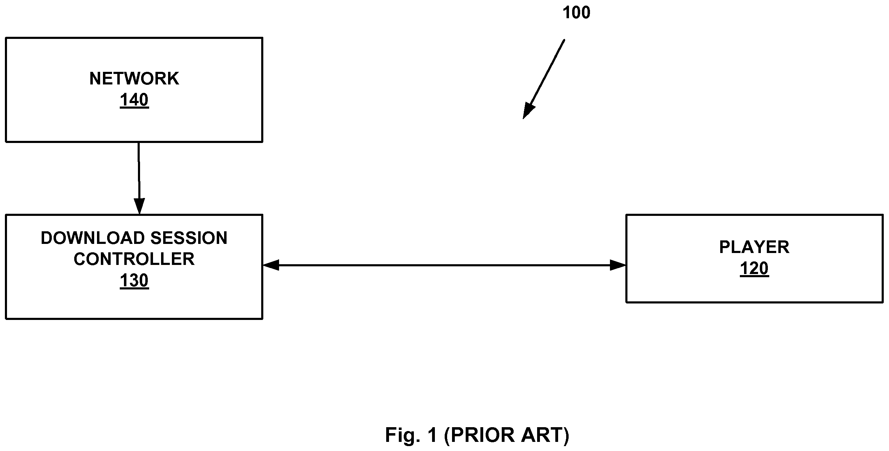

Fig. 1 is a schematic block diagram of a prior-art adaptive video streaming system 100, as described in co-pending International Patent Application No.

PCT/IB2013/059334, comprising a computer network (data source) 140, a video player 120 and an intermediate session controller 130. The session controller 130 provides a general mechanism independent of the content being downloaded or its play rate that uses in parallel a variable number of streams in order to maximize the link throughput at any time.

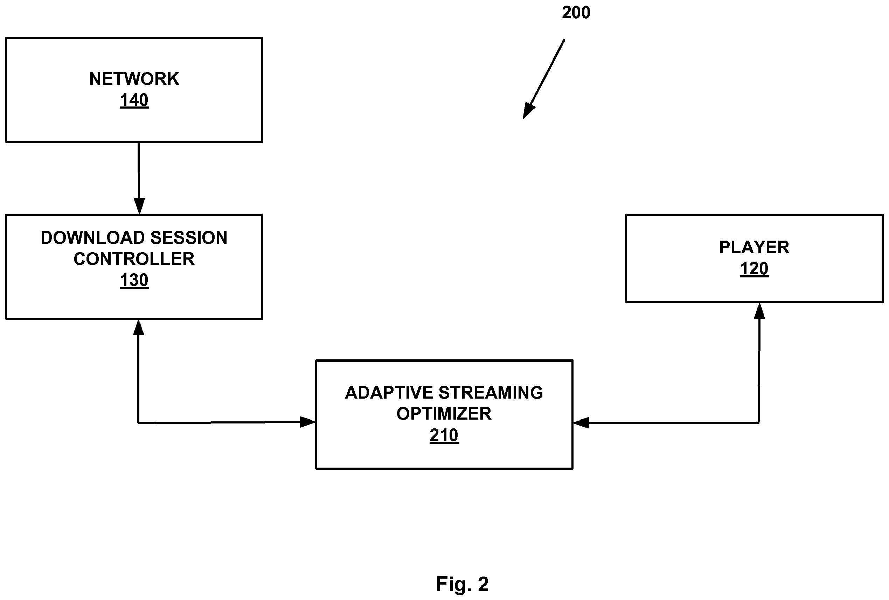

Fig. 2 is a schematic block diagram of an adaptive video streaming system 200 according to the present invention, additionally comprising an adaptive streaming optimizer 210, for predicting the next resolution to be request by the player and determining the downloaded fragments accordingly.
In adaptive streaming, each stream of a given quality (resolution) is built from fragments, so the player can switch to a different stream quality between fragments.
In order to accelerate Adaptive Presentations - we need to download fragments BEFORE the player requests them.
In order to do that - we need to know which streams are available in the presentation, their relations, and the fragments of each individual streams.
This information is found in the Manifest file of the presentation.
".m3u8" for HLS
"/manifest" for SmoothStreaming
".mpd" for MPEG-DASH

The player also needs to know this metadata - so it asks for it in order to play. According to the present invention, the manifest request is intercepted by the optimizer 210, e.g. by specific integration or by proxy auto-config (PAC), the response is parsed, the URL of the stream source is replaced with the URL of the optimization module 210, and the modified version of the manifest is returned to the player 120.

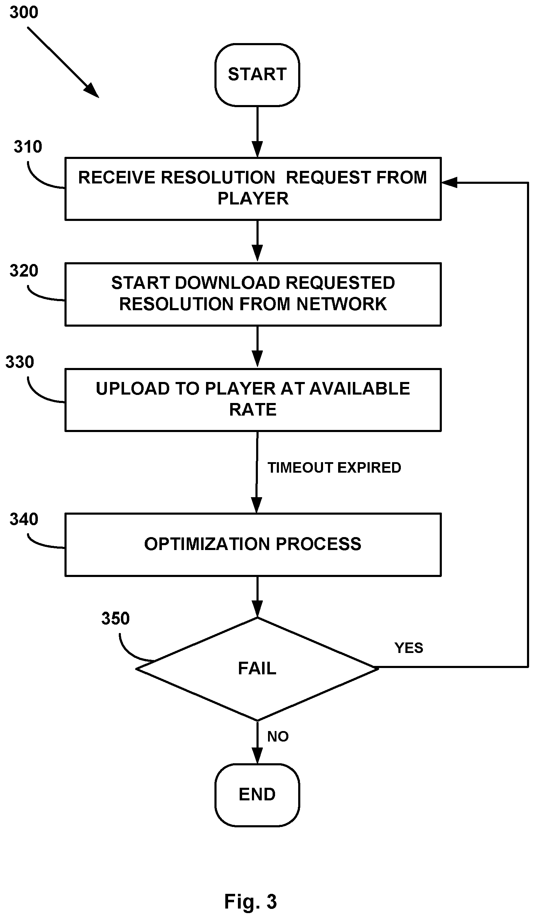

Fig. 3 is a general flowchart 300 showing the processing performed by the adaptive streaming optimizer 210 according to the present invention.
In step 310 the optimizer receives from the player a request for an adaptive video stream to be downloaded from a given URL. The player specifies the required resolution.

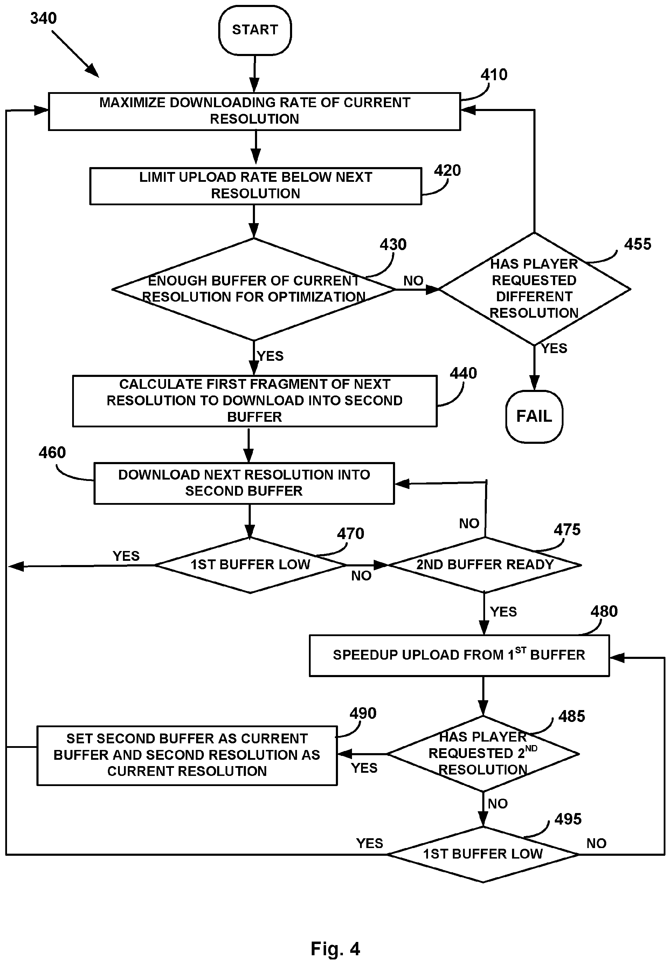

In steps 320 and 330 the optimizer starts downloading fragments of the requested resolution from the given URL and uploading them to the player at the same rate.
At this stage no optimization is done yet, to allow the optimizer enough time for its startup procedure.
In step 340, once the startup time has expired, the optimizer begins performing the optimization process, as will be detailed below in conjunction with Fig. 4.

The optimization process may end:
a. By returning a "Fail" status, in which case the optimizer goes back to step 310 where the player controls the download resolution and rate;
b. By reaching the end of the video stream.

Fig. 4 is a detailed flowchart showing the optimization process 340 performed by the adaptive streaming optimizer 210 according to the present invention. In step 410 the process continues the download of the current resolution fragments at the maximal rate and at the same time limits the upload rate to be just below the rate required for the next (higher) resolution (step 420).

In step 430 the process checks whether the current resolution buffer is full, or has at least enough data to provide to the player till the next resolution buffer is ready for uploading.
The calculation involves:
a. Time required for downloading the next resolution buffer;
b. Time the player requires to transfer to the next resolution once it receives higher rate of data;
c. Time required for reverting to the current resolution if the next buffer is not filled in the expected time.

If the calculation indicates no possibility for resolution enhancement, the the last resolution requested by the player is tested to find out if it is different than both first and second resolutions. This could be caused, for example, by network problems. In this case the process returns a "Fail" status. Otherwise, the process returns to step 410.
In step 440 the process calculates which fragment of the next resolution should be downloaded. The calculation takes into consideration how long it will take to have enough data in the new resolution buffer to start uploading from it.
In step 460 the process starts downloading fragments into the second resolution buffer according to the previous calculation.
In step 470 the process checks whether the first buffer, from which upload to the player is currently being done, is too low to sustain the player in the current resolution. If it is, the process returns to step 410 to continue downloading the current resolution. Otherwise, if the first buffer is full enough, the process checks (step 475) whether the second buffer is ready, i.e. is full enough to start uploading the second resolution to the player. If not - downloading into the second buffer continues in step 460.
If the second resolution buffer is found to be full enough - upload from the current (first) buffer to the player is speeded up (step 480), in order to cause the player to request the second (higher) resolution.
In step 485 the process checks whether, as expected, the player has requested the second resolution. If it has - the buffers are switched, namely the second resolution buffer is set as the current buffer and the second resolution is set as the current resolution (step 490), thus increasing the quality of data sent to the player.
The process then returns to step 410 to try and further improve the data quality.
Otherwise, if no request for the second resolution has been received from the player after having speeded up the upload, the process checks again whether the first buffer, from which upload to the player is currently being done, is too low to sustain the player in the current resolution (step 495). If it is, the process returns to step 410 to continue downloading the current resolution. Otherwise, the upload speedup process continues in step 480.

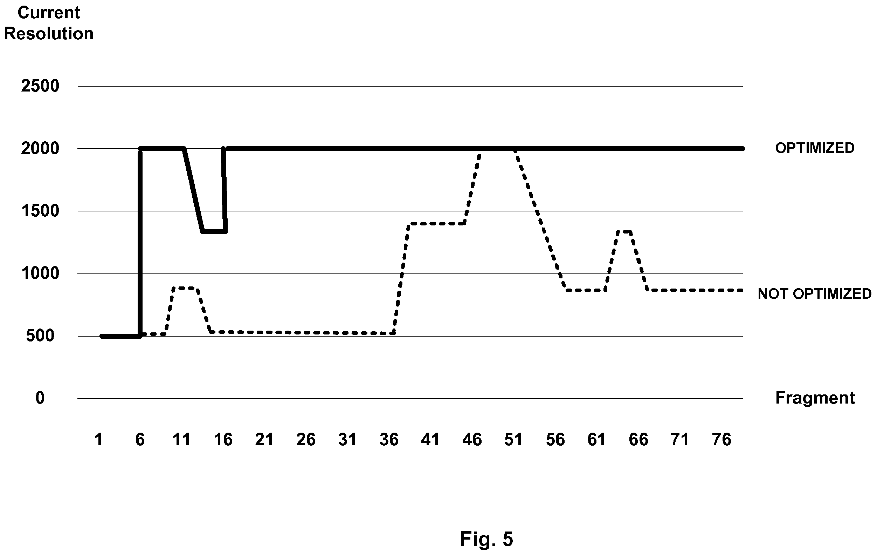

Fig. 5 is a graph showing empirical results of using the optimization according to the present invention, showing a stable high resolution as compared to the prior art non-optimized method.

## Claims

1. An adaptive video streaming system (200) for use with a computer network (140) comprising a data source and a video player (120), the system comprising:
a session controller (130) configured to use in parallel a variable number of streams in order to maximize download throughput from said data source to said video player; and **characterized by**
an adaptive streaming optimizer (210) connected between the data source and the video player (120), wherein the adaptive streaming optimizer (210) is configured to: receive a request from a video player to download an adaptive video stream from a given URL in a specified resolution (310); download fragments of the specified resolution into a buffer (320) and upload them from the buffer to the player at the same rate (330); wait for a pre-determined time before starting an optimization process (340); and start an optimization process (340) which comprises maximizing the download rate of current resolution fragments (410) by using said variable number of streams and limiting the upload rate of current resolution fragments to be below the rate required for a next higher resolution (420); downloading fragments of the next resolution into a second buffer (460); speeding up the upload rate of current resolution fragments to be at a rate required for a next higher resolution; and uploading fragments to the player (120) from the second buffer if the player (120) requests the next resolution and the second buffer is full enough (490, 475).

2. A method of adaptive video streaming optimization comprising
receiving from a video player (120) a request for an adaptive video stream to be downloaded from a given URL in a specified resolution (310); and
**characterized by**:
downloading fragments of the specified resolution from the given URL (320) into a buffer and uploading them to the player (120) from the buffer at the same rate (330); and after a pre-determined time has elapsed - starting an optimization process (340), wherein said starting an optimization process (340) comprises maximizing the download rate of current resolution fragments from the given URL (410) by using variable number of streams and limiting the upload rate of the current resolution fragments to the player (120) to be below the rate required for a next higher resolution; downloading fragments of the next resolution into a second buffer (460); speeding up the upload rate of current resolution fragments to be at a rate required for a next higher resolution; and uploading fragments to the player (120) from the second buffer if the player (120) requests the next resolution and the second buffer is full enough (490, 475).

## Patentansprüche

1. Adaptives Videostreaming-System (200) zum Verwenden mit einem Computernetzwerk (140), umfassend eine Datenquelle und einen Videoplayer (120), wobei das System umfasst:
einen Sitzungskontroller (130), welcher zum parallelen Verwenden einer variablen Anzahl von Datenströmen konfiguriert ist, um den Herunterladedurchsatz von der Datenquelle zum Videoplayer zu maximieren; und **gekennzeichnet durch**
einen adaptiven Streaming-Optimierer (210), welcher zwischen der Datenquelle und dem Videoplayer (120) verbunden ist, wobei der adaptive Streaming-Optimierer (210) konfiguriert ist zum: Empfangen einer Anforderung von einem Videoplayer, einen adaptiven Videodatenstrom von einer gegebenen URL mit einer vorgegebenen Auflösung (310) herunterzuladen; Herunterladen von Fragmenten mit der vorgegebenen Auflösung in einen Puffer (320) und Hochladen derselben von einem Puffer zum Player mit demselben Durchsatz (330); Abwarten einer vorbestimmten Zeitspanne, bevor ein Optimierungsprozess (340) gestartet wird; und Starten eines Optimierungsprozesses (340), welcher die Maximierung des Herunterladedurchsatzes von Fragmenten (410) mit der aktuellen Auflösung durch Verwenden der variablen Anzahl von Datenströmen und Begrenzen des Hochladedurchsatzes der Fragmente mit der aktuellen Auflösung auf unterhalb des Durchsatzes, welcher für eine nächsthöhere Auflösung (420) benötigt wird, umfasst; Herunterladen von Fragmenten mit der nächsten Auflösung in einen zweiten Puffer (460); Beschleunigen des Hochladedurchsatzes von Fragmenten mit der aktuellen Auflösung auf einen Durchsatz, der für eine nächsthöhere Auflösung benötigt wird; und Hochladen von Fragmenten zum Player (120) vom zweiten Puffer, falls der Player (120) die nächste Auflösung anfordert und der zweite Puffer voll genug ist (490, 475).

2. Verfahren zur adaptiven Videostreaming-Optimierung, umfassend
das Empfangen von einem Videoplayer (120) einer Anforderung für einen herunterzuladenden adaptiven Videodatenstrom von einer gegebenen URL mit einer vorgegebenen Auflösung (310); und **gekennzeichnet durch**:
das Herunterladen von Fragmenten mit der vorgegebenen Auflösung von der gegebenen URL (320) in einen Puffer und Hochladen derselben in den Player (120) vom Puffer mit derselben Auflösung (330); und nach Vergehen einer vorgegebenen Zeitspanne
- Starten eines Optimierungsprozesses (340), wobei das Starten eines Optimierungsprozesses (340) das Maximieren des Herunterladedurchsatzes der Fragmente mit der aktuellen Auflösung von der gegebenen URL (410) durch Verwenden einer variablen Anzahl von Datenströmen und Begrenzen des Hochladedurchsatzes der Fragmente mit der aktuellen Auflösung in den Player (120) auf unter dem Durchsatz, welcher für eine nächsthöhere Auflösung benötigt wird, umfasst; Herunterladen von Fragmenten mit der nächsten Auflösung in einen zweiten Puffer (460); Beschleunigen des Hochladedurchsatzes der Fragmente mit der aktuellen Auflösung auf einen Durchsatz, welcher für eine nächsthöhere Auflösung benötigt wird; und Hochladen von Fragmenten zum Player (120) vom zweiten Puffer, falls der Player (120) die nächste Auflösung anfordert und der zweite Puffer voll genug ist (490, 475).

## Revendications

1. Système adaptatif de diffusion en continu de vidéo (200) pour une utilisation avec un réseau d'ordinateurs (140) comprenant une source de données et un lecteur vidéo (120) ; le système comprenant :
un contrôleur de session (130) qui est configuré de manière à utiliser en parallèle un nombre variable de flux de diffusion en continu afin de maximiser le débit de téléchargement depuis ladite source de données jusqu'audit lecteur vidéo ; et **caractérisé par**
un optimiseur adaptatif de diffusion en continu (210) qui est connecté entre la source de données et le lecteur vidéo (120), dans lequel l'optimiseur adaptatif de diffusion en continu (210) est configuré de manière à : recevoir une requête qui provient d'un lecteur vidéo pour télécharger un flux adaptatif de diffusion en continu de vidéo en provenance d'un URL donné selon une résolution spécifiée (310) ; télécharger des fragments de la résolution spécifiée à l'intérieur d'un tampon (320) et les téléverser depuis le tampon sur le lecteur selon la même vitesse (330) ; attendre un temps prédéterminé avant le démarrage d'un processus d'optimisation (340) ; et démarrer un processus d'optimisation (340) qui comprend la maximisation de la vitesse de téléchargement de fragments de résolution courants (410) en utilisant ledit nombre variable de flux de diffusion en continu et en limitant la vitesse de téléversement de fragments de résolution courants de telle sorte qu'elle soit inférieure à la vitesse requise pour une résolution plus élevée suivante (420) ; télécharger des fragments de la résolution suivante à l'intérieur d'un second tampon (460) ; accélérer la vitesse de téléversement de fragments de résolution courants de telle sorte qu'elle soit égale à une vitesse requise pour une résolution plus élevée suivante ; et téléverser des fragments sur le lecteur (120) depuis le second tampon si le lecteur (120) demande en requête la résolution suivante et que le second tampon est suffisamment plein (490, 475).

2. Procédé d'optimisation adaptative de diffusion en continu de vidéo comprenant
la réception, depuis un lecteur vidéo (120), d'une requête pour qu'un flux adaptatif de diffusion en continu de vidéo soit téléchargé depuis un URL donné selon une résolution spécifiée (310) ; et **caractérisé par** :
le téléchargement de fragments de la résolution spécifiée à partir de l'URL donné (320) à l'intérieur d'un tampon et leur téléversement sur le lecteur (120) depuis le tampon selon la même vitesse (330) ; et après qu'un temps prédéterminé s'est écoulé - le démarrage d'un processus d'optimisation (340), dans lequel ledit démarrage d'un processus d'optimisation (340) comprend la maximisation de la vitesse de téléchargement de fragments de résolution courants depuis l'URL donné (410) en utilisant un nombre variable de flux de diffusion en continu et en limitant la vitesse de téléversement des fragments de résolution courants sur le lecteur (120) de telle sorte qu'elle soit inférieure à la vitesse requise pour une résolution plus élevée suivante ; le téléchargement de fragments de la résolution suivante à l'intérieur d'un second tampon (460) ; l'accélération de la vitesse de téléversement de fragments de résolution courants de telle sorte qu'elle soit égale à une vitesse requise pour une résolution plus élevée suivante ; et le téléversement de fragments sur le lecteur (120) depuis le second tampon si le lecteur (120) demande en requête la résolution suivante et que le second tampon est suffisamment plein (490, 475).
